# NEW EUROPEAN PATENT SPECIFICATION

(11) **EP 0 180 231 B2**
(45) Date of publication and mention of the opposition decision: **05.11.1997**
(45) Mention of the grant of the patent: 13.01.1993
(21) Application number: 85113883.4
(22) Date of filing: 31.10.1985
(51) Int. Cl.: H02J 3/18

(54) **Static var compensator circuit**
Statische Blindleistungskompensationsschaltung
Circuit statique de compensation d'énergie réactive

(30) Priority: 01.11.1984 JP 228867/84
(43) Date of publication of application: 07.05.1986
(73) Proprietor: MITSUBISHI DENKI KABUSHIKI KAISHA, Tokyo 100 (JP)
(72) Inventor: Takeda, Masatoshi, Nishinomiya City Hyogo Prefecture (JP); Sashida, Nobuo, Kobe City Hyogo Prefecture (JP)
(74) Representative: Sajda, Wolf E., Dipl.-Phys.

(56) References cited:
- EP-A- 0 046 221
- DE-B- 2 329 287
- US-A- 3 963 978
- SIEMENS REVIEW, vol. 44, no. 8, August 1977, pages 356-360, Berlin, DE; W. HOCHSTETTER: "Properties of static compensators for power supply systems"
- G.E.C JOURNAL OF SCIENCE AND TECHNOLOGY, vol 47, no. 3, 1981, pages 142-148, London, GB; H.L. THANAWALA et al.: "Operating characteristics of static compensators"

## Description

The invention relates to a static var compensator circuit comprising a reactor, connected in series with static switch means for controlling the conduction current thereof, and a capacitor connected in parallel with the series connection of the reactor and the static switch means, wherein a separate reactor is connected between a node of the reactor and the capacitor, and an output terminal of the static var compensator.

Such a static var (volt ampere reactive) compensator circuit is known from the publication W. Hochstetter, "Properties of static compensators for power supply systems" in SIEMENS REVIEW, vol. 44, No. 8, August 1977, Berlin, pages 356 to 360.

According to this static var compensator circuit, the switch means formed by a thyristor controller is connected in series with a reactor. This series connection of the reactor and the thyristor controller is connected in parallel with a capacitor bank. The node of this parallel connection is connected in series with a normal transformer for coupling the circuit to a high-voltage network.

The United States Patent US-A-3,963,978 discloses a reactive power compensator having separately variable reactive impedance elements coupled into the power circuit. The primary winding of a transformer is connected to a power supply. The secondary winding is connected to the load, while the third winding of the transformer is connected to the variable impedance elements.

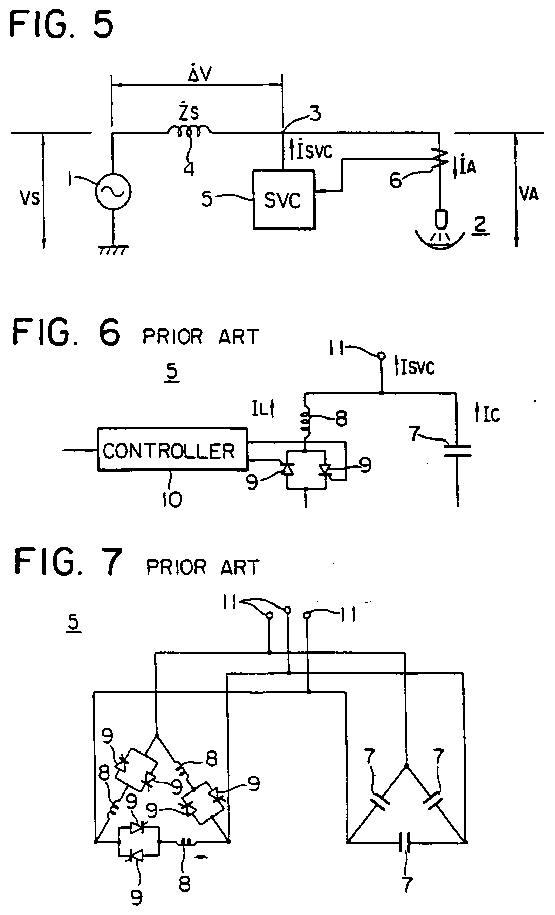

First, the principle of a static var compensator and prior art embodiments of static var compensator circuits will be explained with reference to Fig. 5 to 8. As shown in Fig. 5, an AC power source 1 has one end thereof grounded and has the other end thereof connected through a system impedance 4 to a static var compensator or SVC 5 and also to a fluctuating load 2 such as an arc furnace. The system impedance 4 denotes an impedance from the AC power source 1 to the node 3 between the SVC 5 and the load 2. A current transformer 6 detects a current flow to the load 2, thereby to inform the SVC 5 of the fluctuation of the load 2. The SVC 5 suppresses a voltage fluctuation which is incurred at the node 3 by the fluctuation of the load 2.

Fig. 6 is a single-line connection diagram showing a prior-art SVC 5. This SVC 5 comprises a parallel connection assembly which consists of a capacitor 7 for supplying reactive power and a reactor 8 for absorbing reactive power. Static switch means 9 such as thyristors, which are connected in inverse parallel relationship, are connected in series with the reactor 8 and control the current flowing through the reactor 8. The gate terminals of the static switch means 9 are connected to a controller 10, and the node between the capacitor 7 and the reactor 8 is connected to an output terminal 11.

Fig. 7 is a three-line connection diagram showing a prior art SVC 5. In the figure, the same symbols denote identical or corresponding portions and components.

Referring to Fig. 5, when the current flow to the load 2 is denoted by İ_{A}. this load current İ_{A} can be decomposed into an active current I_{Ar} and a reactive current jI_{Ai}.${{\text{I}}^{̇}}_{\text{A}} {\text{= I}}_{\text{Ar}} {\text{+ jI}}_{\text{Ai}}$ where$\text{j =} \sqrt{\text{-1}} \text{.}$

Assuming now that the SVC 5 be not operating, so current İ_{SVC} = O holds, then the voltage V_{A} at the node 3 undergoes a voltage drop (ΔV̇) given by the product between the system impedance 4 having a value is Ż_{S} and the load current İ_{A} when compared with the voltage V_{S} of the AC power source 1.$\text{Δ} {\text{V}}^{̇} \text{=} {{\text{Z}}^{̇}}_{\text{S}} \text{x} {{\text{I}}^{̇}}_{\text{A}}$

Ż_{S} includes the impedances of a transmission line or a transformer, and substantially consists only of an inductance component jX_{S}.${{\text{Z}}^{̇}}_{\text{S}} {\text{= jX}}_{\text{S}}$

Accordingly, the magnitude ΔV of the voltage drop is expressed by the product between the inductance component jX_{S} of the system impedance 4 and the reactive current jI_{Ai} in the current İ_{A} flowing to the load 2:${\text{ΔV = jX}}_{\text{S}} {\text{x jI}}_{\text{Ai}} {\text{= -X}}_{\text{S}} {\text{• I}}_{\text{Ai}}$

That is, the voltage V_{A} at the node 3 fluctuates according to the reactive current jl_{Ai} which flows through the load 2. Therefore, when the load fluctuations comprise a large reactive component as, for example, in arc furnaces, the voltage at the node 3 fluctuates greatly, thereby disturbing other power customers.

The SVC 5 is installed in order to suppress such voltage fluctuations. The current I_{A} flowing to the load 2 is detected by the current transformer 6, and the SVC 5 provides the reactive current I_{SVC} in response thereto which cancels the reactive current component in the detected current, in order to cancel the fluctuation of the reactive current flowing through the system impedance 4 and to stabilize the voltage at the node 3.

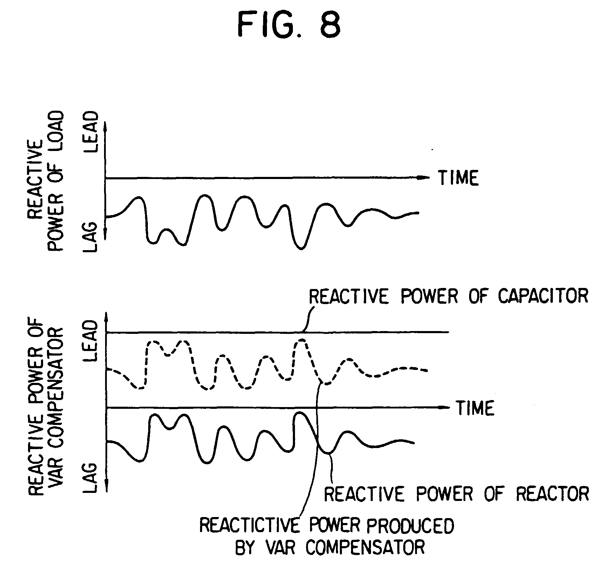

Next, the operation of the prior-art SVC shown in Fig. 6 will be described with reference to Fig. 8. The capacitor 7 supplies the output terminal 11 with a fixed reactive power. On the other hand, the reactor 8 consumes some reactive power. Therefore, the SVC 5 supplies the output terminal 11 with the difference between the reactive power supplied by the capacitor 7 and the reactive power consumed by the reactor 8. In this regard, the current flow through the reactor 8 is controlled by the static switch means 9 so as to produce an output reactive power which cancels the reactive power detected by the controller 10. Accordingly, the fluctuation of reactive current generated by the load 2 is cancelled to stabilize the voltage at the node 3.

When using a prior-art SVC 5 having a structure as described above, there has been the problem that the capacitor 7, the reactor 8 and the static switch means 9 need to have large capacities which correspond to the maximum leading reactive capacity to be provided by the static var compensator or SVC 5, respectively.

The object underlying the present invention is to provide a static var compensator circuit having reduced capacities of the capacitor, the reactor and the static switch means in order to obtain a small-sized apparatus which can be constructed more economically and requires a reduced installation area.

The static var compensator circuit according to the invention is defined in claim 1.

A specific embodiment according to the invention is characterized by a transformer having a first delta connection of windings the angles of which are connected to the output terminals, a second delta connection of windings the angles of which are connected to the angles of a delta connection of capacitors, and a third star-shaped connection of windings the outer ends of which are connected to the respective one ends of the static switch means and the center of which is connected in common to the respective other ends of the static switch means.

In the static var compensator circuit according to the invention, the following advantageous effect is obtained: When the reactive power consumed by the reactor is low, a voltage V_{C} applied to the capacitor and the reactor is nearly equal to the voltage V_{SVC} at the output terminal, so that the reactive power to be supplied by the capacitor increases. When the reactive power consumed by the reactor is high, the voltage V_{C} lowers, so that the reactive power to be supplied by the capacitor decreases.

The invention will be explained in detail in connection with various embodiments and with reference to the accompanying drawings, wherein,
- Fig. 1: is a three-line connection diagram showing a prior art static VAR compensator;
- Fig. 2: is a single-line connection diagram showing a prior art static VAR compensator;
- Fig. 3: is a three-line connection diagram showing an embodiment of this invention;
- Fig. 4: is a single-line connection diagram showing a schematic representation of the embodiment of Fig 3;
- Fig. 5: is a connection diagram showing the principle of a static var compensator;
- Fig. 6: is a single-line connection diagram showing a prior-art static var compensator;
- Fig. 7: is a three-line connection diagram shown a prior-art static var compensator; and
- Fig. 8: is a graph showing the reactive power levels of a load and a static var compensator.

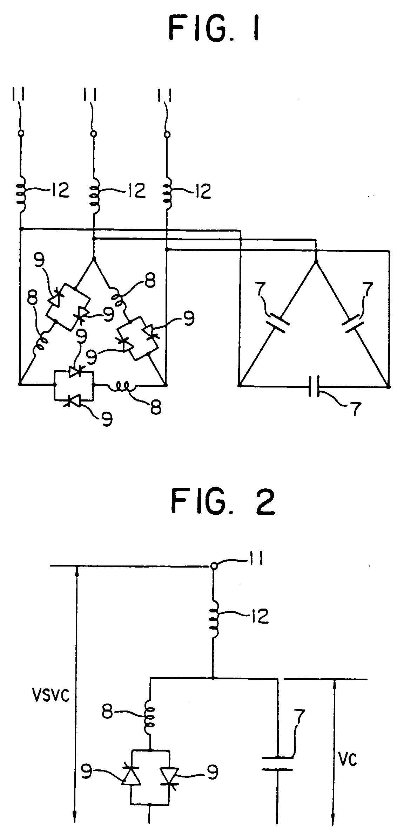

Now, a static var compensator will be described with reference to the drawings. Fig. 1 is a three-line connection diagram in which separate reactors 12 are respectively connected between the nodes of capacitors 7 and reactors 8, connected in parallel, and output terminals 11. Fig. 2 is a single-line connection diagram for explaining the principle.

Next, the operation will be described with reference to Fig. 2. On account of the presence of the reactor 12, even when the voltage V_{SVC} at the output terminal 11 is constant, a voltage V_{C} which is applied to the capacitor 7 and the reactor 8 varies depending upon the magnitude of reactive current which passes through the reactor 12. On the other hand, reactive power which the capacitor 7 supplies is proportional to the square of the applied voltage. In this case, accordingly, the reactive power which the capacitor 7 supplies is not constant. When the reactive power consumed by the reactor 8 is low, the voltages V_{C} and V_{SVC} are approximately equal, so that the reactive power to be supplied by the capacitor 7 becomes high. Conversely, when the reactive power consumed by the reactor 8 is high, the voltage V_{C} lowers, and the reactive power to be supplied by the capacitor 7 becomes low. That is, even when the control range of the reactor 8 is identical, reactive power in a wider range is, in effect, controllable.

Further, under the condition that when the voltage V_{SVC} is 1 P. U. (power unit), the apparatus can provide a phase leading reactive capacity of at most 1 P. U., the reactor 12 is assumed to be of 0,2 P. U. Then, the capacitor 7 requires 1,2 P. U. As the current of the reactor 8 is increased, the voltage V_{C} lowers. When the reactive power passing through the reactor 12 has become zero, V_{C} = V_{SVC} holds at which the output of the apparatus is zero. Under this state, the reactive power which is supplied by the capacitor 7 decreases in proportion to the sqaure of the voltage and is 1/1,2 P. U., and the reactor 8 is consuming a reactive power of 1/1,2 = 0,833 P. U. That is, the reactive power of 1 P. U. can be controlled when the capacities of the reactor 8 and static switch means 9 are 0,833 P. U.

On the other hand, as regards the capacitor 7, it ordinarily supplies a reactive power smaller than the maximum phase leading reactive capacity, and only when the maximum phase leading reactive capacity is necessary, it can supply great reactive power owing to the rise of the voltage by the effect of the reactor 12. Therefore, a capacitor having a small rated power may be temporarily used under an overload condition.

As stated above each of the capacitor 7, reactor 8 and static switch means 9 can have a small capacity, so that the miniaturization and economization of the apparatus can be achieved.

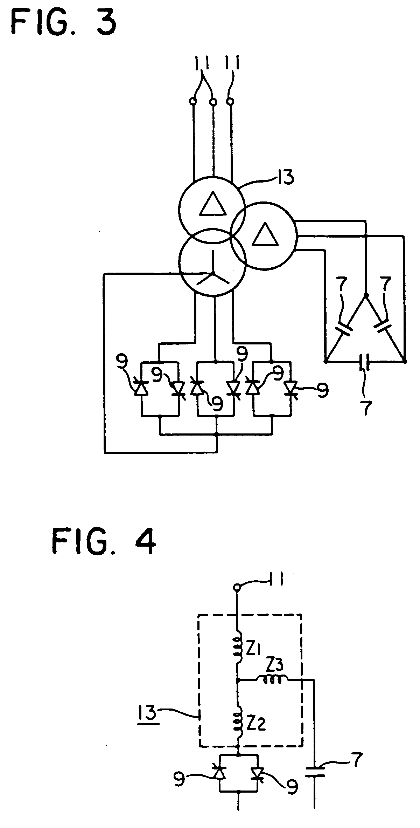

Fig. 3 is a three-line connection diagram showing an embodiment of this invention. Transformers 13 each having three windings have primary windings connected to the output terminals 11 of a var compensator, secondary windings connected to static switch means 9, and tertiary windings connected to capacitors 7. Fig. 4 is a single-line connection diagram of this other embodiment, in which the leakage impedances of the primary, secondary and tertiary windings of the transformer 13 are respectively denoted by Z1, Z2 and Z3.

Here, the impedance Z1 performs a function corresponding to the reactor 12 in Fig. 2, the impedance Z2 is endowed with a comparatively great impedance and performs a function corresponding to the reactor 8 in Fig. 2 (the quantity by which it consumes reactive power is controlled by the static switch means 9), and the impedance 23 is endowed with a substantially zero impedance.

With this embodiment, in addition to the foregoing effects, the transformer 13 can be substituted for the two reactors as described above, and moreover, the secondary voltage and tertiary voltage of the transformer 13 can be respectively set at any desired voltage permitting the static switch means 9 and capacitor 7 to be constructed most economically, so that an apparatus or a circuit can be provided which is economical and the installation area of which is small.

## Claims

1. A static var compensator circuit connected in parallel to a transmission line connecting a power supply to a load, said static var compensator comprising:
a reactor (8), connected in series with static switch means (9) for controlling the conduction current thereof, and
a capacitor (7) connected in parallel with the series connection of the reactor (8) and the static switch means (9),
a separate reactor (12) connected between a node of the reactor (8) and the capacitor (7) and an output terminal (11) of the static var compensator circuit connected to said transmission line,
wherein a transformer (13) is provided having a primary winding (Z1) connected between the node and the output terminal (11), which functions as the separate reactor (12), a secondary winding (Z2) connected between the node and the static switch means (9), which functions as the reactor (8), and a tertiary winding (Z3), connected between the node and the capacitor (7), which presents a substantially zero impedance.

2. The static var compensator circuit according to claim 1,
characterized by said transformer (13) having a first delta connection of windings the angles of which are connected to the output terminals (11), a second delta connection of windings the angles of which are connected to the angles of a delta connection of capacitors (7), and a third star-shaped connection of windings the outer ends of which are connected to the respective one ends of the static switch means (9) and the center of which is connected in common to the respective other ends of the static switch means (9).

## Patentansprüche

1. Statische Var-Kompensatorschaltung, die parallel zu einer Übertragungsleitung geschaltet ist, welche eine Stromversorgung mit einer Last verbindet, wobei die statische Var-Kompensatorschaltung folgendes aufweist:
- eine Drossel (8), die mit einer statischen Schalteinrichtung (9) in Reihe geschaltet ist, um deren Leitungsstrom zu steuern,
- einen Kondensator (7), der der Reihenschaltung aus der Drossel (8) und der statischen Schalteinrichtung (9) parallelgeschaltet ist, und
- eine gesonderte Drossel (12), die zwischen einen Verbindungspunkt der Drossel (8) und des Kondensators (7) sowie einen Ausgangsanschluß (11) des statischen Var-Kompensators geschaltet ist, der an die Übertragungsleitung angeschlossen ist,
wobei ein Transformator (13) vorgesehen ist, der eine Primärwicklung (Z1), die zwischen den Verbindungspunkt und den Ausgangsanschluß (11) geschaltet ist und als die gesonderte Drossel (12) wirkt, eine Sekundärwicklung (Z2), die zwischen den Verbindungspunkt und die statische Schalteinrichtung (9) geschaltet ist und als die Drossel (8) wirkt, und eine Tertiärwicklung (Z3) aufweist, die zwischen den Verbindungspunkt und den Kondensator (7) geschaltet ist und eine Impedanz von im wesentlichen Null darstellt.

2. Statische Var-Kompensatorschaltung nach Anspruch 1,
dadurch gekennzeichnet,
daß der Transformator (13) mit einer ersten Dreieckschaltung von Wicklungen, deren Ecken mit den Ausgangsanschlüssen (11) verbunden sind, mit einer zweiten Dreieckschaltung von Wicklungen, deren Ecken mit den Ecken einer Dreieckschaltung von Kondensatoren (7) verbunden sind, und mit einer dritten sternförmigen Schaltung von Wicklungen versehen ist, deren äußere Enden mit den jeweils einen Enden der statischen Schalteinrichtung (9) verbunden sind und deren Mittelpunkt gemeinsam mit den jeweils anderen Enden der statischen Schalteinrichtung (9) verbunden ist.

## Revendications

1. Circuit compensateur statique de Var connecté en parallèle avec une ligne de transmission reliant une source de courant à une charge, ledit compensateur statique de Var comportant:
une self (8) connectée en série avec des moyens interrupteurs statiques (9) pour commander le courant de conduction de celle-ci, et
un condensateur (7) connecté en parallèle avec la connexion en série de la self (8) et des moyens interrupteurs statiques (9),
une self séparée (12) connectée entre un point de connexion commun de la self (8) et du condensateur (7), et une borne de sortie (11) du circuit compensateur statique de Var connecté à ladite ligne de transmission,
ce circuit étant pourvu d'un transformateur (13) ayant un enroulement primaire (Z1) qui est connecté entre le point de connexion commun et la borne de sortie (11) et qui fonctionne comme la self séparée (12), un enroulement secondaire (Z2) qui est connecté entre le point de connexion commun et les moyens interrupteurs statiques (9) et qui fonctionne comme la self (8), et un enroulement tertiaire (Z3) qui est connecté entre le point de connexion commun et le condensateur (7) et qui présente une impédance sensiblement égale à zéro.

2. Circuit compensateur statique de Var selon la revendication 1, caractérisé en ce que ledit transformateur (13) comporte un premier montage d'enroulements en delta, dont les angles sont connectés aux bornes de sortie (11), un second montage d'enroulements en delta, dont les angles sont connectés aux angles d'un montage en delta de condensateurs (7), et un troisième montage d'enroulements en étoile, dont les extrémités extérieures sont connectées aux extrémités respectives des moyens interrupteurs statiques (9) et dont le centre est connecté en commun aux autres extrémités respectives des moyens interrupteurs statiques (9).
